# FASCICULE DE BREVET EUROPEEN

(11) **EP 3 185 703 B1**
(45) Date de publication et mention de la délivrance du brevet: **22.08.2018**
(21) Numéro de dépôt: 15759705.5
(22) Date de dépôt: 27.08.2015
(51) Int. Cl.: A23L 33/115, A23L 3/3481, A23L 5/00, A23L 33/135, A23L 29/10, A23P 10/30

(54) **FORMULATION HUILEUSE COMPRENANT AU MOINS UNE BACTÉRIE PROBIOTIQUE**
ÖLIGE FORMULIERUNG MIT MINDESTENS EINEM PROBIOTISCHEN BAKTERIUM
OILY FORMULATION COMPRISING AT LEAST ONE PROBIOTIC BACTERIUM

(30) Priorité: 28.08.2014 BE 201400639
(43) Date de publication de la demande: 05.07.2017
(73) Titulaire: Vesale Pharma Sa, 5310 Noville-sur-Mehaigne (BE)
(72) Inventeur: QUINTENS, Johan Henri Herman, B-3320 Hoegaarden (BE); LIENART VAN LIDTH DE JEUDE, Jehan, B-5310 Noville-sur-Mehaigne (BE)
(74) Mandataire: Gevers Patents
(86) Numéro de dépôt international: PCT/EP2015/069591
(87) Numéro de publication internationale: WO 2016/030440

(56) Documents cités:
- WO-A2-2010/103374
- US-A1- 2010 055 083
- US-A1- 2012 039 998

## Description

La présente invention se rapporte à une formulation huileuse comprenant au moins une bactérie probiotique et comprenant :
- une première phase huileuse comprenant au moins une huile végétale saturée ou hydrogénée dans laquelle est incorporée ladite au moins une bactérie probiotique,
- une deuxième phase huileuse comprenant au moins une huile végétale polyinsaturée différente de ladite huile végétale saturée ou hydrogénée, et
- au moins un agent dispersant.

Une formulation huileuse est connue du document WO2010/103374 qui divulgue la mise en suspension de bactéries probiotiques coatées ou non en surface dans une phase huileuse de type huile d'olive, huile de maïs ou encore huile de sésame. Cette mise en suspension des bactéries probiotiques dans une phase huileuse a pour objectif d'assurer une stabilité des bactéries probiotiques au cours du temps afin d'en maintenir une viabilité la plus élevée possible en évitant notamment qu'elles ne précipitent, ne s'agrègent ou ne forment un sédiment.

Le document US2012/039998 divulgue également une formulation huileuse comprenant au moins une bactérie probiotique.

Malheureusement, une formulation telle que celle décrite dans le document WO2010/103374 ou dans le document US2012/039998 ne permet d'éviter que partiellement les problèmes de précipitation, d'agrégation et de sédimentation des bactérie probiotiques dont une mortalité importante est observée au cours du temps, ceci même si les bactéries probiotiques ont été préalablement coatées avant mise en solution dans la phase huileuse et que cette dernière est conservée dans des conditions de températures optimales spécifiques et sous agitation. Ces problèmes sont d'ailleurs communément rencontrés lors de la suspension de bactéries probiotiques dans une huile. En effet, il est bien connu que, sous la force de gravité, les bactéries probiotiques précipitent et forment un précipité non utilisable puisqu'il est composé essentiellement de bactéries probiotiques non viables. Enfin, une homogénéisation des suspensions actuelles de bactéries probiotiques est particulièrement difficile à obtenir dès lors que les bactéries probiotiques ont tendance à précipiter au cours du temps, ce qui en provoque une mortalité importante.

Il existe donc un réel besoin de fournir une formulation qui puisse être stable et homogène au cours du temps en écartant les problématiques de précipitation, d'agrégation et de sédimentation des bactéries probiotiques, ces problèmes étant responsables d'une mortalité importante de ces dernières. Il importe également de fournir une formulation homogène qui permette de maintenir les propriétés des bactéries probiotiques sans que ces dernières ne soient altérées. Enfin, il convient de fournir une formulation qui puisse être conservée à température ambiante sans que la phase huileuse ne se solidifie et sans avoir à réaliser en permanence ou à intervalles réguliers une agitation de la formulation visant à limiter la précipitation des bactéries probiotiques.

Pour résoudre ces problèmes inhérents aux formulations huileuses actuelles contenant des bactéries probiotiques, il est prévu suivant l'invention, une formulation telle qu'indiquée au début, caractérisée en ce que ladite première phase huileuse est formée par un mélange d'une huile de palme hydrogénée et d'une huile de coco hydrogénée, ledit mélange présentant une température de fusion comprise entre 20°C et 30°C et étant présent en une quantité allant de 2 à 5% en poids par rapport au poids total de ladite formulation.

Par les termes « dans laquelle est incorporée ladite au moins une bactérie probiotique », on entend, au sens de la présente invention, que ladite au moins une bactérie probiotique se trouve dans ladite première phase huileuse, laquelle constitue alors un véhicule huileux pour ladite bactérie probiotique qui y reste inclue même lors d'un mélange avec ladite seconde phase huileuse. Ce véhicule huileux ne constitue pas un véritable coating de ladite au moins une bactérie probiotique mais bien une phase huileuse dans laquelle pourrait être incorporée des bactéries probiotiques préalablement coatées (avec par exemple la même huile que celle formant ladite première phase huileuse).

Dans le cadre de la présente invention, il a été déterminé, pour une quantité en poids d'une première phase huileuse comprise entre 2 et 5% par rapport au poids total de la formulation, que cette première phase huileuse apolaire formée par le mélange d'une huile de palme hydrogénée et d'une huile de coco hydrogénée (ce mélange étant réalisé de telle sorte qu'il présente une température de fusion comprise entre 20°C et 30°C) permet :
- d'assurer que la formulation obtenue soit stable et homogène au cours du temps (pas de sédimentation, pas de précipitation, pas d'agrégation des bactéries probiotiques),
- d'assurer un maintien des propriétés des bactéries probiotiques sans altération de ces dernières au cours du temps,
- d'assurer que la formulation obtenue ne se solidifie pas ni à température ambiante, ni à des températures de conservation de par exemple 15°C et 4°C,
- d'assurer une viabilité élevée des bactéries probiotiques au cours du temps, c'est-à-dire d'assurer une viabilité de l'ordre d'au moins 10⁶ CFU/ml à 10¹⁰ CFU/ml au cours du temps.

Par ailleurs, il a été montré, qu'en présence d'un agent dispersant, la dispersion d'une première phase huileuse comprenant au moins une huile végétale saturée ou hydrogénée et dans laquelle est incorporée au moins une bactérie probiotique dans au moins dans une deuxième phase huileuse comprenant au moins une huile végétale polyinsaturée contribue à résoudre les problèmes mentionnés ci-dessus. En effet, il a été montré qu'une telle formulation huileuse sous la forme d'une dispersion suivant l'invention permet d'éviter les problématiques de précipitation, d'agrégation et de sédimentation des bactéries probiotiques de telle façon que la formulation huileuse obtenue est stable et homogène au cours du temps, tout en préservant les propriétés des bactéries probiotiques qui ne sont aucunement altérées, ceci sans avoir à réaliser en permanence ou à intervalles réguliers une agitation de la formulation visant à limiter la précipitation des bactéries probiotiques.

Suivant l'invention, il a été déterminé que la présence d'un agent dispersant permet de réaliser une dispersion d'une première phase huileuse à base d'une huile végétale saturée ou hydrogénée comprenant au moins une bactérie probiotique dans une deuxième phase huileuse comprenant une huile végétale polyinsaturée, chacune des phases huileuses comprenant des corps gras de natures différentes de telle façon à maintenir la viabilité des bactéries probiotiques sans en altérer les propriétés tout en évitant les problématiques liées à la précipitation et/ou à l'agrégation de ces derniers au sein de la formulation huileuse. En outre, selon l'invention, ces problématiques sont solutionnées de façon durable, par exemple durant une durée de conservation d'au moins deux mois à température ambiante et sans avoir à agiter la formulation obtenue à intervalles réguliers pour éviter une précipitation des probiotiques.

Plus particulièrement, l'agent dispersant assure la dispersion de la première phase huileuse composée d'une huile végétale saturée ou hydrogénée incorporant les bactéries probiotiques dans la deuxième phase huileuse de telle sorte que les bactéries probiotiques incorporées dans la première phase huileuse ne précipitent pas mais restent dispersées dans la deuxième phase huileuse plus légère, c'est-à-dire une huile insaturée, comprenant une huile végétale polyinsaturée. Par conséquent, dès lors que les bactéries probiotiques sont incorporées dans la première phase huileuse et qu'elles ne précipitent pas grâce à la dispersion de la première phase huileuse dans la deuxième phase huileuse, leur viabilité ainsi que leurs propriétés ne sont pas altérées.

Par ailleurs, suivant l'invention, les bactéries probiotiques sont incorporées dans une première phase huileuse à base d'une huile végétale saturée ou hydrogénée, laquelle est particulièrement stable dès lors qu'elle présente, suite à une hydrogénation, moins de doubles liaisons responsables de l'instabilité des huiles.

Avantageusement, ladite formulation huileuse présente une viscosité dynamique comprise entre 0,1 Pa.s et 0,35 Pa.s, de préférence une viscosité dynamique de 0,18 Pa.s, préférentiellement une viscosité dynamique de 0,15 Pa.s à une température de 15°C (viscosité mesurée avec un viscosimètre Brookfield, modèle RVT, série 611).

Il a été déterminé qu'une telle viscosité obtenue par la présence des deux phases huileuse de natures distinctes est adéquate afin d'éviter les problèmes de précipitation des bactéries probiotiques et de maintenir une viabilité élevée de ces dernières, c'est-à-dire une viabilité d'au moins 10⁶ CFU/ml de formulation et allant jusqu'à 10¹⁰ CFU/ml de formulation. En outre, une telle viscosité permet le maintien de la formulation à l'état liquide à des températures de l'ordre de 15 à 17°C. Ceci permet de conserver les formulations suivant l'invention à des températures relativement basse sans solidification des huiles formant les première et deuxième phases huileuses.

De préférence, ledit au moins un agent dispersant est un surfactant non ionique lipophile choisi dans le groupe constitué des polysorbates, de la lécithine, des sorbitanes, des esters de sorbitane et de leurs mélanges.

Contre toute attente, alors qu'il est bien connu que la présence des agents dispersants dans une formulation comprenant des bactéries probiotiques a un impact négatif sur ces dernières en termes de viabilité et en termes de préservations de leurs propriétés, il a été déterminé qu'un agent dispersant de type surfactant non ionique lipophile (les polysorbates, la lécithine, les sorbitanes, les esters de sorbitane ou encore leurs mélanges) n'a pas d'impact négatif sur les bactéries probiotiques. En effet, il a été déterminé, dans le cadre de la présente invention, que ce type d'agent dispersant n'altère ni la viabilité des bactéries probiotiques ni leurs propriétés, par exemple leur aptitude à réguler la flore intestinale.

Avantageusement, ledit au moins un agent dispersant est présent en une quantité allant de 0,5 à 2% en poids par rapport au poids total de ladite formulation.

Un tel agent dispersant, par exemple présent en une telle quantité en poids par rapport au poids total de la formulation a été déterminé, dans le cadre de la présente invention, comme étant adéquat pour assurer une dispersion de la première phase huileuse dans la deuxième phase huileuse afin d'assurer que les bactéries probiotiques incorporées dans ladite première phase huileuse ne précipitent pas et conservent une viabilité élevée de l'ordre d'au moins 10⁶CFU/ml de formulation et allant jusqu'à 10¹⁰ CFU/ml de formulation.

Préférentiellement, ladite au moins une huile végétale saturée ou hydrogénée présente une valeur peroxyde inférieure à 5 meq O₂/kg.

Une telle valeur peroxyde de l'huile végétale saturée ou hydrogénée de la première phase huileuse permet de prévenir la dégradation des bactéries probiotiques et assure une incorporation correcte des bactéries probiotiques dans ladite première phase huileuse.

Avantageusement, ladite au moins une huile végétale polyinsaturée est choisie dans le groupe constitué de l'huile de soja, l'huile de canola, l'huile de tournesol, l'huile de macadamia, l'huile d'arachide, l'huile de pépins de raisin, l'huile de graines de citrouille, l'huile de lin, l'huile d'olive, l'huile de maïs, l'huile de carthame, l'huile de sésame, l'huile de noyau de pin, l'acide linoléique conjugué, l'huile d'onagre, l'huile d'amande, l'huile de noyau de pêche, huile de noyau d'abricot, l'huile de noix, l'huile de colza, l'huile de graines de framboise, l'huile de graines de myrtille, l'huile de graines de canneberge et d'autres huiles de graines de fruits, l'huile de coco fractionnée et de leurs mélanges.

Avantageusement, ladite au moins une huile végétale polyinsaturée est présente en une quantité supérieure à 90% en poids par rapport au poids total de ladite formulation.

De telles proportions en chacune des huiles formant respectivement la première et la deuxième phase huileuse ont été déterminées comme étant adéquates afin que la première phase huileuse soit dispersée de façon optimale dans la deuxième phase huileuse, c'est-à-dire de telle façon que les bactéries probiotiques ne précipitent pas mais restent dispersées dans la deuxième phase huileuse lorsqu'elles sont incorporées par la première phase huileuse.

Préférentiellement, ladite au moins une bactérie probiotique est une bactérie probiotique microencapsulée ou non, coatée ou non.

Selon l'invention, avant d'être incorporées dans ladite première phase huileuse, les bactéries probiotiques peuvent être préalablement coatées ou microencapsulées, ce qui en renforce encore la viabilité.

De préférence, ladite au moins une bactérie probiotique présente une taille de particules inférieure à 600 µm.

Avantageusement, ladite au moins une bactérie probiotique est présente dans ladite formulation à raison de 10⁶ à 10¹⁰ CFU/ml de formulation.

De préférence, ladite formulation comprend en outre un additif choisi dans le groupe constitué des agents antioxydants, des agents stabilisateurs, des agents épaississants, des agents nutritifs, des acides gras et de leurs mélanges.

Par exemple, des flavonoïdes, des caroténoïdes, du tocotriénol, du tocophérol ou encore des terpènes peuvent être utilisés comme agents antioxydants dans le cadre de la présente invention. Ces agents contribuent à la stabilité de la formulation en permettant d'éliminer les problèmes d'oxydation.

Des sources végétales d'oméga 3, de l'huile de poisson ou de krill, des sources d'oméga 6, des monoglycérides d'acides gras ou encore des diglycérides d'acides gras peuvent quant à eux être utilisés comme acides gras complémentaires.

De la cire d'abeilles peut être utilisée en tant qu'agent épaississant.

Des monosaccharides, des polysaccharides, des acides aminés, des peptides, des protéines, des vitamines, des extraits de levure, des sels d'halogénure d'un métal alcalin ou d'un métal alcalino-terreux, des minéraux, du glycérol, de l'acétate de zinc, du chlorure de zinc, du lactate de zinc, de l'acide ascorbique, de l'acide citrique ou encore une matière grasse du lait peuvent être utilisés comme agents nutritifs.

D'autres formes de réalisation de la formulation suivant l'invention sont indiquées dans les revendications annexées.

La présente invention a aussi pour objet un procédé de fabrication d'une formulation huileuse comprenant au moins une bactérie probiotique, ledit procédé comprenant les étapes de :
- préparation d'un pré-mix par mélange et incorporation de ladite au moins une bactérie probiotique dans une première phase huileuse formée par un mélange d'une huile de palme hydrogénée et d'une huile de coco hydrogénée, ledit mélange présentant une température de fusion comprise entre 20°C et 30°C et étant présent en une quantité allant de 2 à 5% en poids par rapport au poids total de ladite formulation, et
- mélange dudit pré-mix préalablement préparé dans une deuxième phase huileuse comprenant au moins une huile végétale polyinsaturée avec addition d'au moins un agent dispersant.

De préférence, suivant le procédé suivant l'invention, une étape de microencapsulation ou de revêtement de ladite au moins une bactérie probiotique est effectuée préalablement à ladite étape de préparation d'un pré-mix.

Avantageusement, ladite étape de revêtement est réalisée par application, par exemple par pulvérisation, d'un revêtement étant choisi dans le groupe constitué de l'alginate, du chitosan, de la pectine, du pullulan, de la gélatine, de la carraghénine, de l'agar, de la cellulose, de l'hémicellulose, de l'éthylcellulose, de la carboxycellulose, et leur mélange.

De préférence, le procédé selon l'invention comprend une étape additionnelle de conditionnement de ladite formulation, par exemple par encapsulation dans une gélule molle, par remplissage dans une ampoule ou par remplissage d'une gélule dure dont le coeur est liquide.

D'autres formes de réalisation du procédé suivant l'invention sont indiquées dans les revendications annexées.

La présente invention porte également sur l'utilisation d'une formulation selon l'invention pour la fabrication de gélules molles ou pour le remplissage dans une ampoule ou pour le remplissage d'une gélule dure dont le coeur est liquide.

D'autres formes d'utilisation d'une formulation selon l'invention sont indiquées dans les revendications annexées.

### Exemples

### 1. Formulation selon l'invention

Le Tableau 1 ci-dessous mentionne les quantités des différents composés pour 100 ml d'une formulation huileuse suivant l'invention :

**Tableau 1**

| **Composé** | **Quantité** | **Fonction** |
|---|---|---|
| Huile de de tournesol | 94 ml | Deuxième phase huileuse |
| Huile saturée ou hydrogénée coco - palme (40/60) | 2,5 ml | Première phase huileuse |
| Lactobacillus rhamnosus | 1 g | Bactérie probiotique |
| Monolaurate de sorbitane | 1 g | Surfactant non ionique lipophile (dispersant) |
| Alpha tocophérol acétate | 0,2 g | Antioxydant |
| Lycopène | 0,04 g | Antioxydant et colorant |
| Cholécalciférol | 0,001 g | Source de vitamine D3 |

Les bactéries probiotiques Lactobacillus rhamnosus sont incorporées dans la première phase huileuse consistant en un mélange 40/60 d'huile de coco hydrogénée et d'huile de palme hydrogénée pour former un pré-mix dont la température de fusion est comprise entre 20°C et 30°C, lequel est ensuite dispersé, grâce à la présence du monolaurate de sorbitane (agent dispersant), dans une deuxième phase huileuse consistant en une huile polyinsaturée étant l'huile de tournesol.

Des additifs de type antioxydants et/ou colorant (alpha tocophérol acétate, lycopène) et une source de vitamine D3 sont également ajoutés selon ce mode de réalisation d'une formulation suivant l'invention.

### 2. Viabilité des bactéries probiotiques dans une formulation selon l'invention

Des essais ont été menés afin de mesurer au cours du temps la viabilité des bactéries probiotiques pour une formulation telle que décrite à l'exemple 1 et conservée à deux températures différentes (4°C et 25°C), cette formulation n'étant jamais être soumise à une quelconque agitation sauf juste avant le prélèvement de l'échantillon analysé.

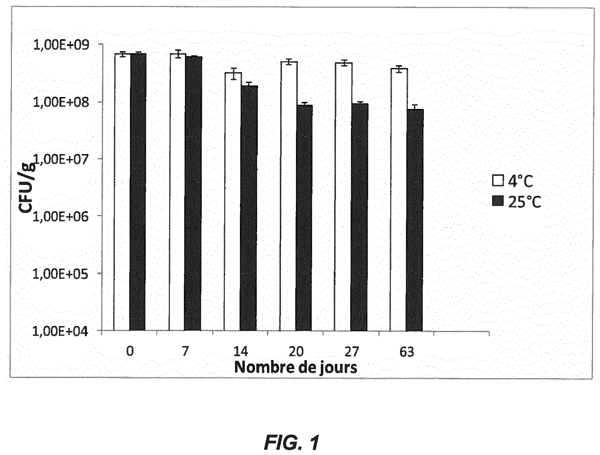

Trois répétitions ont été effectuées pour chaque mesure de la viabilité des bactéries probiotiques (CFU/g). Ces mesures de viabilité des bactéries probiotiques ont été effectuées après 7, 14, 20, 27 et 63 jours suite à la préparation de la formulation selon l'invention. La figure 1 reprend les résultats obtenus.

Comme on peut le constater, sans agitation, la viabilité des bactéries probiotiques présentes dans une formulation selon l'invention est particulièrement élevée. En effet, lorsque la formulation huileuse est conservée à une température de 4°C, un taux de survie de 73% et de 58% sont relevés respectivement après 27 et 63 jours.

### 3. Essais comparatifs de stabilité de compositions selon l'invention comprenant des quantités (% en poids) variables de la première phase huileuse (huile végétale saturée ou hydrogénée)

Des essais comparatifs ont été réalisés en faisant varier uniquement, pour une même formulation de base, la quantité en poids de la première phase huileuse. Des quantités en poids (% en poids) de 2,5%, 6% et 8% par rapport au poids total de la formulation ont été testées afin de déterminer si la formulation obtenue reste sous forme liquide stable, c'est-à-dire si la formulation obtenue ne solidifie pas auquel cas les propriétés et la viabilité des bactéries probiotiques seraient altérées.

Ces essais ont été réalisés selon trois températures différentes, c'est-à-dire en exposant les formulations formées à 4°C, à 15°C et à 25°C durant 24 h. Les résultats obtenus sont repris au Tableau 3 ci-dessous tandis que le Tableau 2 reprend les différentes formulations testées.

**Tableau 2**

| | % en poids | | |
|---|---|---|---|
| | Formulation 1 | Formulation 2 | Formulation 3 |
| Huile de tournesol | 92,47 | 88,97 | 86,97 |
| Mélange d'huile de coco hydrogénée et d'huile de palme hydrogénée, le mélange présentant une température de fusion comprise entre 20°C et 30°C | 2,5 | 6 | 8 |
| Cire d'abeille | 2,5 | 2,5 | 2,5 |
| Lactobacillus rhamnosus | 1,48 | 1,48 | 1,48 |
| Monolaurate de sorbitane | 0,85 | 0,85 | 0,85 |
| Alpha tocophénol acétate | 0,2 | 0,2 | 0,2 |

**Tableau 3**

| | Formulation 1 | Formulation 2 | Formulation 3 |
|---|---|---|---|
| 4°C | phase liquide | phase solide | phase solide |
| 15°C | phase liquide | phase solide | phase solide |
| 25°C | phase liquide | phase semi-solide | phase solide |

Comme on peut le constater, après 24 h, seule la formulation 1 suivant l'invention comprenant la première phase huileuse à raison de 2,5% en poids par rapport au poids total de la formulation se maintient sous forme liquide et stable (pas de précipitation, pas d'agrégation, pas de sédimentation des bactéries probiotiques) aux températures de 4°C, 15°C et 25°C. Par contre, il a été observé que les formulations 2 et 3 comprenant respectivement 6 et 8% en poids de première phase huileuse par rapport au poids total de la formulation se présentent sous forme semi-solide ou solide à ces mêmes températures après 24 h.

### 4. Formulation suivant l'invention : essais avec différentes deuxièmes phases huileuses (huiles végétales polyinsaturées)

Plusieurs formulations ont été testées afin de déterminer si, pour une même première phase huileuse formée par un mélange d'une huile de palme hydrogénée et d'une huile de coco hydrogénée (le mélange présentant une température de fusion comprise entre 20°C et 30°C), diverses secondes phases huileuses comprenant une huile végétale polyinsaturée pouvaient convenir. Il a été déterminé, pour chaque formulation, si elle restait sous forme liquide stable (pas de précipitation, pas d'agrégation, pas de sédimentation des bactéries probiotiques) à 4°C, 15°C et 25°C après 24 heures.

Les résultats obtenus sont repris au Tableau 5 tandis que le Tableau 4 reprend les différentes formulations testées.

Comme on peut le constater, quelle que soit l'huile végétale polyinsaturée formant la deuxième phase huileuse, des formulations liquides stables (pas de précipitation, pas d'agrégation, pas de sédimentation des bactéries probiotiques) sont systématiquement observées après 24 h pour les températures de 15°C et 25°C. Notons qu'à la température de 4°C, les formulations 5 et 8 se présentent sous forme semi-liquide. Par ailleurs, il ressort de cet exemple que, quel que soit le dispersant utilisé, des formulations liquides stables sont systématiquement obtenues à chacune des températures testées.

**Tableau 4**

| | % en poids | | | | |
|---|---|---|---|---|---|
| | Formulation 4 | Formulation 5 | Formulation 6 | Formulation 7 | Formulation 8 |
| Deuxième phase huileuse | Huile de tournesol 92,47 | Huile d'olive 91,32 | Mélange d'huiles* 92,47 | Huile d'arachide 91,32 | Huile de soja 91,32 |
| Première phase huileuse : mélange d'huile de coco hydrogénée et d'huile de palme hydrogénée, le mélange présentant une température de fusion comprise entre 20°C et 30°C | 2,5 | 2,5 | 2,5 | 2,5 | 2,5 |
| Cire d'abeille | 2,5 | 2,5 | 2,5 | 2,5 | 2,5 |
| Lactobacillus rhamnosus | 1,48 | 1,48 | 1,48 | 1,48 | 1,48 |
| Dispersant | Monolaurate de sorbitane | Lécithine | Monolaurate de sorbitane | Lécithine | Lécithine |
| | 0,85 | 2 | 0,85 | 2 | 2 |
| Alpha tocophénol acétate | 0,2 | 0,2 | 0,2 | 0,2 | 0,2 |

| | | | | | |
|---|---|---|---|---|---|
| * MCT (Médium Chain Triglyceride) | | | | | |

**Tableau 5**

| | Formulation 4 | Formulation 5 | Formulation 6 | Formulation 7 | Formulation 8 |
|---|---|---|---|---|---|
| 4°C | Phase liquide | Phase semi-liquide | Phase liquide | Phase liquide | Phase semi-liquide |
| 15°C | Phase liquide | Phase liquide | Phase liquide | Phase liquide | Phase liquide |
| 25°C | Phase liquide | Phase liquide | Phase liquide | Phase liquide | Phase liquide |

Il est bien entendu que la présente invention n'est en aucune façon limitée aux formes de réalisations décrites ci-dessus et que bien des modifications peuvent y être apportées sans sortir du cadre des revendications annexées.

## Revendications

1. Formulation huileuse comprenant au moins une bactérie probiotique et comprenant :
- une première phase huileuse comprenant au moins une huile végétale saturée ou hydrogénée dans laquelle est incorporée ladite au moins une bactérie probiotique,
- une deuxième phase huileuse comprenant au moins une huile végétale polyinsaturée différente de ladite huile végétale saturée ou hydrogénée, et
- au moins un agent dispersant,
ladite formulation étant **caractérisée en ce que** ladite première phase huileuse est formée par un mélange d'une huile de palme hydrogénée et d'une huile de coco hydrogénée, ledit mélange présentant une température de fusion comprise entre 20°C et 30°C et étant présent en une quantité allant de 2 à 5% en poids par rapport au poids total de ladite formulation.

2. Formulation huileuse selon la revendication 1, **caractérisée en ce qu'**elle présente une viscosité dynamique comprise entre 0,1 Pa.s et 0,35 Pa.s, de préférence une viscosité dynamique de 0,18 Pa.s, préférentiellement une viscosité dynamique de 0,15 Pa.s à une température de 15°C, la viscosité étant mesurée avec un viscosimètre Brookfield, modèle RVT, série 611.

3. Formulation huileuse selon la revendication 1 ou 2, **caractérisée en ce que** ledit au moins un agent dispersant est un surfactant non ionique lipophile choisi dans le groupe constitué des polysorbates, de la lécithine, des sorbitanes, des esters de sorbitane et de leurs mélanges.

4. Formulation huileuse selon l'une quelconque des revendications précédentes, **caractérisée en ce que** ledit au moins un agent dispersant est présent en une quantité allant de 0,5 à 2% en poids par rapport au poids total de ladite formulation.

5. Formulation huileuse selon l'une quelconque des revendications précédentes, **caractérisée en ce que** ladite au moins une huile végétale polyinsaturée est choisie dans le groupe constitué de l'huile de soja, l'huile de canola, l'huile de tournesol, l'huile de macadamia, l'huile d'arachide, l'huile de pépins de raisin, l'huile de graines de citrouille, l'huile de lin, l'huile d'olive, l'huile de maïs, l'huile de carthame, l'huile de sésame, l'huile de noyau de pin, l'acide linoléique conjugué, l'huile d'onagre, l'huile d'amande, l'huile de noyau de pêche, huile de noyau d'abricot, l'huile de noix, l'huile de colza, l'huile de graines de framboise, l'huile de graines de myrtille, l'huile de graines de canneberge et d'autres huiles de graines de fruits, l'huile de coco fractionnée et de leurs mélanges.

6. Formulation huileuse selon l'une quelconque des revendications précédentes, **caractérisée en ce que** ladite au moins une huile végétale polyinsaturée est présente en une quantité supérieure à 90% en poids par rapport au poids total de ladite formulation.

7. Formulation huileuse selon l'une quelconque des revendications précédentes, **caractérisée en ce que** ladite au moins une bactérie probiotique est une bactérie probiotique microencapsulée ou non, coatée ou non.

8. Formulation huileuse selon l'une quelconque des revendications précédentes, **caractérisée en ce que** ladite au moins une bactérie probiotique présente une taille de particules inférieure à 600 µm.

9. Formulation huileuse selon l'une quelconque des revendications précédentes, **caractérisée en ce que** ladite au moins une bactérie probiotique est présente dans ladite formulation à raison de 10⁶ à 10¹⁰ CFU/ml de formulation.

10. Formulation huileuse selon l'une quelconque des revendications précédentes, **caractérisée en ce qu'**elle comprend en outre un additif choisi dans le groupe constitué des agents antioxydants, des agents stabilisateurs, des agents épaississants, des agents nutritifs, des acides gras et de leurs mélanges.

11. Procédé de fabrication d'une formulation huileuse comprenant au moins une bactérie probiotique, ledit procédé comprenant les étapes de :
- préparation d'un pré-mix par mélange et incorporation de ladite au moins une bactérie probiotique dans une première phase huileuse formée par un mélange d'une huile de palme hydrogénée et d'une huile de coco hydrogénée, ledit mélange présentant une température de fusion comprise entre 20°C et 30°C et étant présent en une quantité allant de 2 à 5% en poids par rapport au poids total de ladite formulation, et
- mélange dudit pré-mix préalablement préparé dans une deuxième phase huileuse comprenant au moins une huile végétale polyinsaturée avec addition d'au moins un agent dispersant.

12. Procédé de fabrication selon la revendication 11, **caractérisé en ce qu'**il comprend une étape de microencapsulation ou de revêtement de ladite au moins une bactérie probiotique préalable à ladite étape de préparation d'un pré-mix.

13. Procédé de fabrication selon la revendication 12, caractérisé en ladite étape de revêtement est réalisée par application, par exemple par pulvérisation, d'un revêtement étant choisi dans le groupe constitué de l'alginate, du chitosan, de la pectine, du pullulan, de la gélatine, de la carraghénine, de l'agar, de la cellulose, de l'hémicellulose, de l'éthylcellulose, de la carboxycellulose, et leur mélange.

14. Procédé de fabrication selon l'une quelconque des revendications 11 à 13, **caractérisé en ce qu'**il comprend une étape additionnelle de conditionnement de ladite formulation, par exemple par encapsulation dans une gélule molle, par remplissage dans une ampoule ou par remplissage d'une gélule dure dont le coeur est liquide.

15. Utilisation d'une formulation selon les revendications 1 à 10 pour la fabrication de gélules molles ou pour le remplissage dans une ampoule ou pour le remplissage d'une gélule dure dont le coeur est liquide.

## Patentansprüche

1. Ölige Formulierung mit mindestens einem probiotischen Bakterium, welche Folgendes umfasst:
- eine erste ölige Phase, die mindestens ein gesättigtes oder gehärtetes Pflanzenöl enthält, in das das erwähnte mindestens eine probiotische Bakterium eingemischt ist,
- eine zweite ölige Phase, die mindestens ein mehrfach ungesättigtes Pflanzenöl enthält, das sich vom erwähnten gesättigten oder gehärteten Pflanzenöl unterscheidet, und
- mindestens ein Dispergiermittel,
wobei die erwähnte Formulierung **dadurch gekennzeichnet ist, dass** die erwähnte erste ölige Phase aus einer Mischung eines gehärteten Palmöls und eines gehärteten Kokosöls besteht, wobei die erwähnte Mischung eine Schmelztemperatur von zwischen 20 °C und 30 °C aufweist und in einer Menge von 2 bis 5 Gew.-% im Verhältnis zum Gesamtgewicht der erwähnten Formulierung anwesend ist.

2. Ölige Formulierung nach Anspruch 1, **dadurch gekennzeichnet, dass** sie eine dynamische Viskosität von zwischen 0,1 Pa.s und 0,35 Pa.s aufweist, bevorzugt eine dynamische Viskosität von 0,18 Pa.s, vorzugsweise eine dynamische Viskosität von 0,15 Pa.s bei einer Temperatur von 15 °C, wobei die Viskosität mit einem Brookfield-Viskosimeter, Modell RVT, Serie 611, gemessen wird.

3. Ölige Formulierung nach Anspruch 1 oder 2, **dadurch gekennzeichnet, dass** das mindestens eine Dispergiermittel ein nicht-ionischer, lipophiler, oberflächenaktiver Stoff ist, ausgewählt aus der Gruppe bestehend aus Polysorbaten, Lecithin, Sorbitanen, Sorbitanestern und deren Mischungen.

4. Ölige Formulierung nach irgendeinem der vorigen Ansprüche, **dadurch gekennzeichnet, dass** das erwähnte mindestens eine Dispergiermittel in einer Menge reichend von 0,5 bis 2 Gew.-% im Verhältnis zum Gesamtgewicht der erwähnten Formulierung anwesend ist.

5. Ölige Formulierung nach irgendeinem der vorigen Ansprüche, **dadurch gekennzeichnet, dass** das erwähnte mindestens eine mehrfach ungesättigte Pflanzenöl ausgewählt wird aus der Gruppe bestehend aus Sojaöl, Canolaöl, Sonnenblumenöl, Makadamianussöl, Erdnussöl, Traubenkernöl, Kürbiskernöl, Leinöl, Olivenöl, Maisöl, Distelöl, Sesamöl, Pinienkernöl, konjugierter Linolsäure, Nachtkerzenöl, Mandelöl, Pfirsichkernöl, Aprikosenkernöl, Walnussöl, Rapsöl, Himbeerkernöl, Heidelbeerkernöl, Moosbeerkernöl und anderen Obstkernölen, fraktioniertem Kokosöl und deren Mischungen.

6. Ölige Formulierung nach irgendeinem der vorigen Ansprüche, **dadurch gekennzeichnet, dass** das erwähnte mindestens eine mehrfach ungesättigte Pflanzenöl in einer Menge von mehr als 90 Gew.-% im Verhältnis zum Gesamtgewicht der erwähnten Formulierung anwesend ist.

7. Ölige Formulierung nach irgendeinem der vorigen Ansprüche, **dadurch gekennzeichnet, dass** das erwähnte mindestens eine probiotische Bakterium ein mikroeingekapseltes oder nicht mikroeingekapseltes, beschichtetes oder nicht beschichtetes probiotisches Bakterium ist.

8. Ölige Formulierung nach irgendeinem der vorigen Ansprüche, **dadurch gekennzeichnet, dass** das erwähnte mindestens eine probiotische Bakterium eine Partikelgröße von weniger als 600 µm aufweist.

9. Ölige Formulierung nach irgendeinem der vorigen Ansprüche, **dadurch gekennzeichnet, dass** das erwähnte mindestens eine probiotische Bakterium in der erwähnten Formulierung im Umfang von 106 bis 1.010 KbE/ml Formulierung anwesend ist.

10. Ölige Formulierung nach irgendeinem der vorigen Ansprüche, **dadurch gekennzeichnet, dass** sie ferner einen Zusatz enthält, ausgewählt aus der Gruppe bestehend aus Antioxidanzien, Stabilisatoren, Verdickungsmitteln, Nährstoffen, Fettsäuren und deren Mischungen.

11. Verfahren zur Herstellung einer öligen Formulierung, welche mindestens ein probiotisches Bakterium enthält, wobei das Verfahren folgende Schritte umfasst:
- Zubereitung einer Vormischung durch Mischung und Einmischung des erwähnten mindestens einen probiotischen Bakteriums in eine erste ölige Phase bestehend aus einer Mischung eines gehärteten Palmöls und eines gehärteten Kokosöls, wobei die erwähnte Mischung eine Schmelztemperatur von zwischen 20 °C und 30 °C aufweist und in einer Menge von 2 bis 5 Gew.-% im Verhältnis zum Gesamtgewicht der erwähnten Formulierung anwesend ist, und
- Mischung der erwähnten, zuvor zubereiteten Vormischung in eine zweite ölige Phase, welche mindestens ein mehrfach ungesättigtes Pflanzenöl enthält, unter Hinzufügung von mindestens einem Dispergiermittel.

12. Herstellungsverfahren nach Anspruch 11, **dadurch gekennzeichnet, dass** es einen Schritt der Mikroeinkapselung oder der Beschichtung des erwähnten mindestens einen probiotischen Bakteriums vor dem erwähnten Schritt der Zubereitung einer Vormischung umfasst.

13. Herstellungsverfahren nach Anspruch 12, **dadurch gekennzeichnet, dass** der erwähnte Schritt der Beschichtung durch Auftragen, beispielsweise durch Zerstäubung, einer Beschichtung durchgeführt wird, ausgewählt aus der Gruppe bestehend aus Alginat, Chitosan, Pektin, Pullulan, Gelatine, Carrageen, Agar-Agar, Cellulose, Hemicellulose, Ethylcellulose, Carboxycellulose und deren Mischung.

14. Herstellungsverfahren nach irgendeinem der Ansprüche 11 bis 13, **dadurch gekennzeichnet, dass** es einen zusätzlichen Schritt der Aufbereitung der erwähnten Formulierung umfasst, beispielsweise durch Einkapseln in eine Weichkapsel, durch Füllen in eine Ampulle oder durch Füllen in eine Hartkapsel, deren Kern flüssig ist.

15. Verwendung einer Formulierung nach den Ansprüchen 1 bis 10 zum Herstellen von Weichkapseln oder zum Füllen in eine Ampulle oder zum Füllen einer Hartkapsel, deren Kern flüssig ist.

## Claims

1. Oily formulation comprising at least one probiotic bacterium and comprising:
- a first oil phase comprising at least one saturated or hydrogenated vegetable oil in which is incorporated said at least one probiotic bacterium,
- a second oil phase comprising at least one polyunsaturated vegetable oil different from said saturated or hydrogenated vegetable oil, and
- at least one dispersing agent,
wherein said formulation is **characterised in that** said first oil phase is formed by a mixture of hydrogenated palm oil and hydrogenated coconut oil, said mixture featuring a melting temperature ranging from 20°C to 30°C and being present in a proportion ranging from 2 to 5% by weight with respect to the total weight of said formulation.

2. Oily formulation according to claim 1, **characterised in that** it features a dynamic viscosity ranging from 0.1 Pa.s and 0.35 Pa.s, preferably a dynamic viscosity of 0.18 Pa.s, preferentially a dynamic viscosity of 0.15 Pa.s at a temperature of 15°C, the viscosity being measured with a Brookfield viscometer, RVT model, series 611.

3. Oily formulation according to claim 1 or 2, **characterised in that** said at least one dispersing agent is a lipophilic nonionic surfactant chosen from the group of polysorbates, lechitin, sorbitan esters and mixtures thereof.

4. Oily formulation according to any one of the preceding claims, **characterised in that** said at least one dispersing agent is present in a proportion ranging from 0.5 to 2% by weight with respect to the total weight of said formulation.

5. Oily formulation according to any one of the preceding claims, **characterised in that** said at least one polyunsaturated vegetable oil is chosen from the group of soybean oil, canola oil, sunflower oil, macadamia oil, peanut oil, grape seed oil, pumpkin seed oil, linseed oil, olive oil, corn oil, safflower oil, sesame oil, pine seed oil, conjugated linoleic oil, evening primrose oil, almond oil, peach kernel oil, apricot kernel oil, walnut oil, rapeseed oil, raspberry seed oil, blueberry seed oil, cranberry seed oil and other fruit seed oils, fractionated coconut oil and mixtures thereof.

6. Oily formulation according to any one of the preceding claims, **characterised in that** said at least one polyunsaturated vegetable oil is present in a proportion greater than 90% by weight with respect to the total weight of said formulation.

7. Oily formulation according to any one of the preceding claims, **characterised in that** said at least one probiotic bacterium is a microencapsulated probiotic bacterium or not, coated or uncoated.

8. Oily formulation according to any one of the preceding claims, **characterised in that** said at least one probiotic bacterium features a particle size of less than 600 µm.

9. Oily formulation according to any one of the preceding claims, **characterised in that** said at least one probiotic bacterium is present in said formulation in the amount of 106 to 1010 CFU/ml of the formulation.

10. Oily formulation according to any one of the preceding claims, **characterised in that** it also comprises an additive chosen from the group of antioxidants, stabilising agents, thickening agents, nutrients, fatty acids and mixtures thereof.

11. Process for preparing an oily formulation comprising at least one probiotic bacterium, said process comprising the following steps:
- preparation of a premix by mixing and incorporating said at least one probiotic bacterium in a first oil phase formed by the mixture of hydrogenated palm oil and hydrogenated coconut oil, said mixture featuring a melting temperature ranging from 20°C to 30°C, and present in a proportion ranging from 2 to 5% by weight with respect to the total weight of said formulation, and
- mixture of said prepared premix in a second oil phase comprising at least one polyunsaturated vegetable oil and at least one added dispersing agent.

12. Preparation process according to claim 11, **characterised in that** it comprises a microencapsulation or coating step of said at least one probiotic bacterium before the premix preparation step.

13. Preparation process according to claim 12, **characterised in that** said coating step is carried out by application, by spraying for example, of a coating chosen from the group of alginates, chitosan, pectin, pullulan, gelatine, carrageenan, agar, cellulose, hemicellulose, ethyl cellulose, carboxycellulose and mixtures thereof.

14. Preparation process according to any one of the claims 11 to 13, **characterised in that** it comprises an additional packaging step of said formulation, for example by encapsulation in a soft capsule, by filling in an ampoule or by filling a liquid-filled hard capsule.

15. Use of a formulation according to the claims 1 to 10 for the preparation of soft capsules or for filling an ampoule or a liquid-filled hard capsule.
